# EUROPEAN PATENT SPECIFICATION

(11) **EP 1 774 209 B1**
(45) Date of publication and mention of the grant of the patent: **16.04.2008**
(21) Application number: 05766855.0
(22) Date of filing: 18.07.2005
(51) Int. Cl.: F16K 1/30, F16K 17/10, F17C 13/04, G05D 7/01

(54) **MULTIFUNCTIONAL VALVE UNIT**
MULTIFUNKTIONALE VENTILEINHEIT
UNITE DE SOUPAPE MULTIFONCTIONS

(30) Priority: 21.07.2004 ZA 200405819
(43) Date of publication of application: 18.04.2007
(73) Proprietor: AFRICAN OXYGEN LIMITED, Johannesburg, 2001 Gauteng Province (ZA)
(72) Inventor: GAWRYJOLEK, Thomas Kasper, 16 The Willows, 2090 Gauteng Province (ZA)
(74) Representative: HOFFMANN EITLE
(86) International application number: PCT/IB2005/002059
(87) International publication number: WO 2006/011023

(56) References cited:
- EP-A- 0 869 310
- US-A- 5 566 713
- US-A- 5 996 625
- US-A1- 2003 150 497
- US-B1- 6 167 908

## Description

This invention relates to a multifunctional valve unit. More particularly, the invention relates to a multifunctional valve unit for use on a gas cylinder; such as an oxygen cylinder, the valve unit making provision for the controlled filling with a gas such as oxygen of a gas cylinder to which it is attached, and for the controlled discharge of gas from the cylinder.

The Applicant is aware that multifunctional valve units of the type to which the present invention relates, see, for example, US 6, 167, 908 B1, suffer from the problem that they contain a number of components or sub-assemblies which can be prone to damage or wear, necessitating removal of such units from gas cylinders to which they are attached, and transport thereof to a manufacturer or a supply depot of the manufacturer, for repair and/or reconditioning, before they are, after such repair and/or reconditioning, returned to the users for reattachment to the associated gas cylinders. This problem is aggravated if any user is geographically remote from the manufacturer or the manufacturer's depot, and keeping numbers of spare multifunctional valve units on site is unattractive to a user, because the valve units are of substantial cost. The present invention seeks to alleviate or eliminate this problem.

According to the invention there is provided a multifunctional valve unit for use on a gas cylinder to which it is attached for the controlled filling of the cylinder and for the controlled discharge of gas therefrom, the unit having a unitary or monolithic valve body and the unit comprising:
a filling port, provided by the body, for use in charging a gas cylinder on which the unit is mounted from a gas supply or source;
a cylinder connector, provided by the body, the connector being in gas flow communication, via a gas flow path defined in the valve body , with the filling port, for releasable attachment of the unit to a gas cylinder on which the unit is mounted;
a manually operable manual shut-off valve, mounted on the valve body, for opening and closing the flow path between the filling port and the cylinder connector;
a gas pressure regulator, mounted on the valve body, for regulating the pressure of gas issuing via the unit from a gas cylinder on which the unit is mounted, the regulator having an inlet in gas flow communication, via a gas flow path defined in the valve body and *via* the manual shut-off valve, with the cylinder connector, the manual shut-off valve being operative, simultaneously with its opening and closing the flow path between the filling port and the cylinder connector, to open and close the flow path between the gas pressure regulator and the cylinder connector;
a minimum pressure retention valve, mounted on the valve body, for retaining gas in a gas cylinder on which the unit is mounted at a pressure above a minimum threshold valve, the minimum pressure retention valve being operative to close the flow path between the cylinder connector and the gas pressure regulator when the pressure in the gas cylinder drops to the threshold value, and to open said flow path when the pressure in the gas cylinder rises above the threshold value and the manual shut-off valve is open;
a pressure gauge, mounted on the valve body, for measuring and displaying the gas pressure in the flow path between the cylinder connector and the manual shut-off valve, and thus also for measuring and displaying the pressure in a gas cylinder on which the unit is mounted;
a flow control device, mounted on the valve body, having an inlet in gas flow communication with an outlet from the gas pressure regulator, for controlling the flow rate of gas issuing from the outlet of the gas pressure regulator, and for feeding gas at a controlled flow rate from the gas pressure regulator to a gas outlet from the multifunctional valve unit; and
a pressure relief safety valve, mounted on the valve body, the pressure relief safety valve having an outlet venting to atmosphere and an inlet in communication with the outlet from the gas pressure regulator, for relieving gas pressure where the outlet of the gas pressure regulator communicates with the inlet of the flow control device, and thus for maintaining gas pressure there below a maximum threshold value, the flow control device being, as a whole, replaceably removable from the remainder of the multifunctional valve unit while the cylinder connector is connected to a gas cylinder containing gas and the manual shut-off valve is closed, the remainder of the multifunctional valve unit remaining connected to the gas cylinder by the connector and constituting the valve body, the filling port, the cylinder connector, the shut-off valve, the gas pressure regulator, the minimum pressure retention valve, the pressure gauge, the gas outlet and the pressure relief safety valve.

The feature of the removable replaceability of the flow control device permits removal, from the remainder of the multifunctional valve unit, of a worn or defective flow control device for repair or replacement thereof, after which the removed flow control device, or a replacement flow control device optionally of a different specification, can be returned to its place on the multifunctional valve unit.

The multifunctional valve unit may further comprise an automatic shut-off valve, provided in the flow path between the flow control device and the manual shut-off valve, the automatic shut-off valve being automatically operable, in response to a pressure drop above a minimum threshold value across the automatic shut-off valve and the gas pressure regulator, to close off the flow path between the manual shut-off valve and the gas pressure regulator. The automatic shut-off valve may, as a whole, be replaceably removable from the remainder of the multifunctional valve unit while the cylinder connector is connected to a gas cylinder containing gas and the manual shut-off valve is closed.

The automatic shut-off valve is preferably self-contained, and the automatic shut-off valve may be housed and encapsulated in the interior of the valve body of the multifunctional valve unit, where it is physically protected against abuse arising from rough handling of a gas cylinder on which the multifunctional valve unit is mounted, which promotes fail-safe sealing of the gas flow path between the gas cylinder and the flow control device, at a position upstream of the pressure regulator and flow control device.

The abovementioned automatic shut-off valve acts as a safety feature to prevent unwanted escape of gas from a cylinder on which the unit is mounted, when the flow control device is removed from the multifunctional valve unit in a situation where the manual shut-off valve is accidentally or unintentionally in an open condition.

The multifunctional gas may comprise an outlet port, for connection to a gas terminal, such as a medical gas terminal, the port being provided by the valve body and being in communication with the flow path between the automatic shut-off valve and the gas pressure regulator. Typically, the outlet port is provided by an externally threaded spigot, forming part of the valve body, for spigot/socket-type screwing connection into an internally threaded socket of a gas terminal.

The flow path from the filling port to the cylinder connector is conveniently provided with a plurality of changes in direction and a plurality of changes in cross-sectional flow area, for inhibiting flame propagation along its length.

Preferably the minimum pressure retention valve is operative to open and close the flow path between the cylinder connector and the pressure regulator at a position on the side of the manual shut-off valve remote from the cylinder connector, conveniently at a position between the manual shut-off valve and the automatic shut-off valve. This means that, during filling of a gas cylinder on which the multifunctional valve unit is mounted by gas fed into the filling port of the multifunctional valve unit and passing along the flow path between the filling port and the cylinder connector and then into the cylinder from the cylinder connector, no gas flow takes place through the minimum pressure retention valve, which is only exposed to the pressure of the gas and, during gas discharge from the cylinder, gas flow in a single direction.

The minimum pressure retention valve may, as a whole, in the fashion of the flow control device, in principle be replaceably removable as a whole from the remainder of the multifunctional valve unit while the cylinder connector is connected to a gas cylinder containing gas and the manual shut-off valve is closed, for example when worn or defective, for repair or replacement thereof, naturally provided that the geometry of the valve unit and its parts permit this. Nevertheless, as it is not located in the flow path between the filling port and the cylinder connector, the minimum pressure retention valve is at least partially protected against extreme conditions of low temperature and abrasion by particles entrained in the gas, and as flow in use of gas through it takes place in one direction only, it is expected to have a long service life and to require replacement or repair only infrequently.

In general, the multifunctional gas unit may comprise at least one gas filter downstream of the minimum pressure retention valve in the direction of gas flow from the minimum pressure retention valve towards and through the flow control device. More particularly, the multifunctional gas unit may also include a gas filter for filtering gas flow between the manual shut-off valve and the gas outlet from the multifunctional valve unit. This gas filter may be associated with, or located closely adjacent, the automatic shut-off valve, for example being immediately upstream thereof, the filter conveniently being isolated from the flow path between the filling port and the cylinder connector.

The flow control device typically comprises a rotatable disc having a plurality of small flow orifices therethrough of different sizes or cross-sectional flow areas, and the flow control device may thus include its own gas filter, upstream of the orifices and downstream of the pressure regulator with regard to gas flow from the manual shut-off valve to the outlet of the multifunctional gas unit, so that the multifunctional valve unit may have two gas filters, one associated with the automatic shut-off valve and the other associated with the flow control device, the latter being for resisting blocking of the orifices of the flow control device and of narrow passages associated with the orifices, by particulate contaminants in the gas, by filtering the gas upstream of said orifices and passages, as indicated above. Indeed, the filter associated with the rotatable disc of the flow control device may, instead of being upstream of the orifices in the direction of normal gas flow, be downstream of the disc and orifices, to protect the orifices of the disc from blocking by any grit or other solids entrained in gas during any unintended back-flow thereof in the reverse direction, opposite to the normal direction of gas flow, arising for example from faulty operation of the multifunctional gas unit.

As is the case described above for each of the flow control device, the minimum pressure retention valve and the automatic shut-off valve, the pressure regulator may also, as a whole, be replaceably removable, e.g. when worn or damaged, from the remainder of the multifunctional gas unit while the cylinder connector is connected to a gas cylinder containing gas and the manual shut-off valve is closed. Thus, the unit can be regarded as having various sub-assemblies, which can all be removed when the multifunctional valve unit is mounted on a gas cylinder, while the manual shut-off valve is closed, the automatic shut-off valve acting as a back-up for the manual shut-off valve to prevent gas from issuing from the cylinder when the gas pressure regulator, the pressure relief safety valve, and/or the flow control device is removed from the unit.

The function of the pressure regulator is to reduce the pressure of gas issuing from a cylinder on which the multifunctional valve unit is mounted, to a desirable lower value when entering the flow control device, the pressure regulator opening progressively as gas pressure in the cylinder reduces in response to gas consumption, and opening progressively as gas demand increases, while closing if gas demand decreases. The function of the pressure relief safety valve is to protect the components of the pressure regulator and components of the flow control device from damage arising from excessive gas pressure should the automatic shut-off valve leak or otherwise fail.

The multifunctional gas unit may comprise, mounted on the valve body, an inlet valve which is a one-way or non-return valve for preventing gas flow from taking place in a direction from the manual shut-off valve towards and out of the filling port. The inlet valve may, as a whole, be replaceably removable from the remainder of the multifunctional valve unit while the cylinder connector is connected to a gas cylinder containing gas and the manual shut-off valve is closed.

It is a feature of the present invention that spares can be kept at central depots or filling stations where gas cylinders having the multifunctional valve unit mounted thereon are filled periodically, permitting replacement thereon of flow control devices, pressure regulators, automatic shut-off valves and minimum pressure retention valves, thereby avoiding the need to return the multifunctional valve units to the manufacturer for replacement of these sub-assemblies.

The invention will now be described, by way of non-limiting illustrative example, with reference to the accompanying diagrammatic drawings, in which:
Figure 1 shows an schematic cross-sectional side elevation of a multifunctional valve unit in accordance with the present invention, taken in the direction of line I - I in Figure 2;
Figure 2 shows a schematic cross-sectional side elevation of the unit of Figure 1, taken in the direction of line II - II in Figure 1;
Figure 3 shows an enlarged schematic sectional side elevation of a minimum pressure retention valve, forming part of the unit of Figures 1 and 2, on an enlarged scale; and
Figure 4 shows an enlarged schematic side elevation of an alternative form of an inlet valve for the unit of Figures 1 - 2.

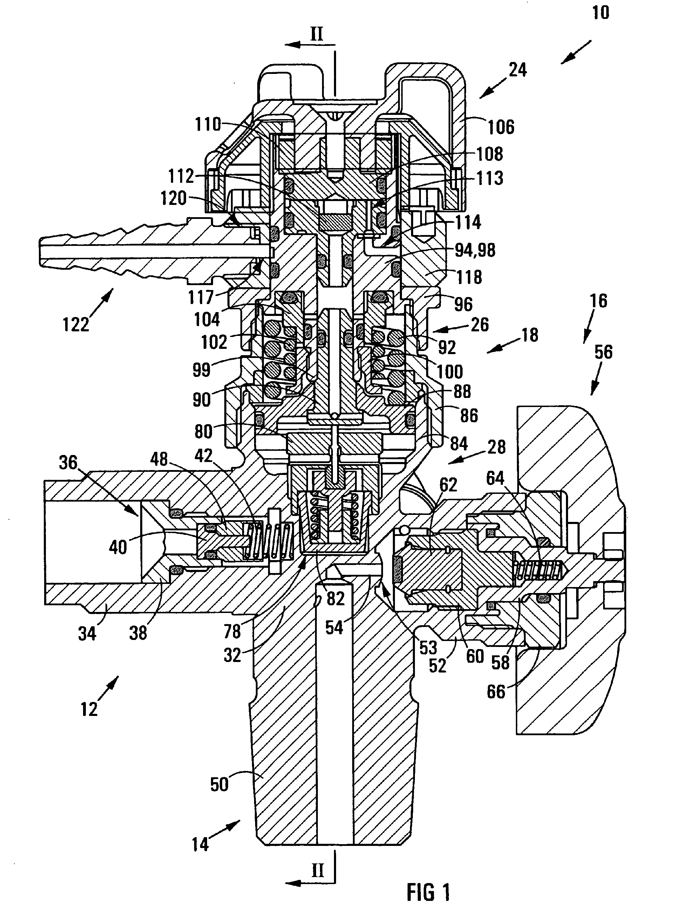

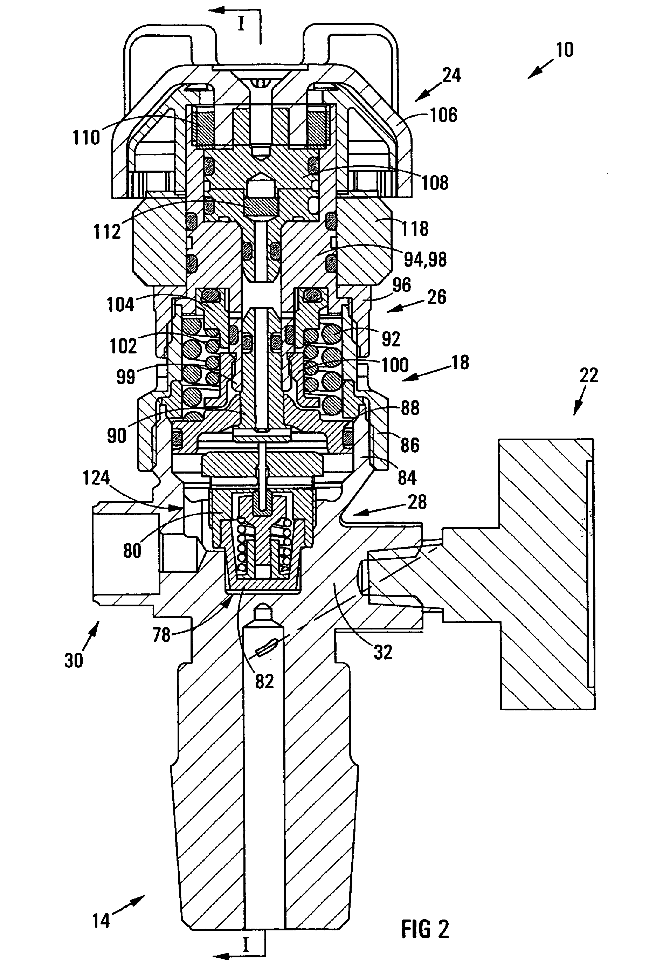

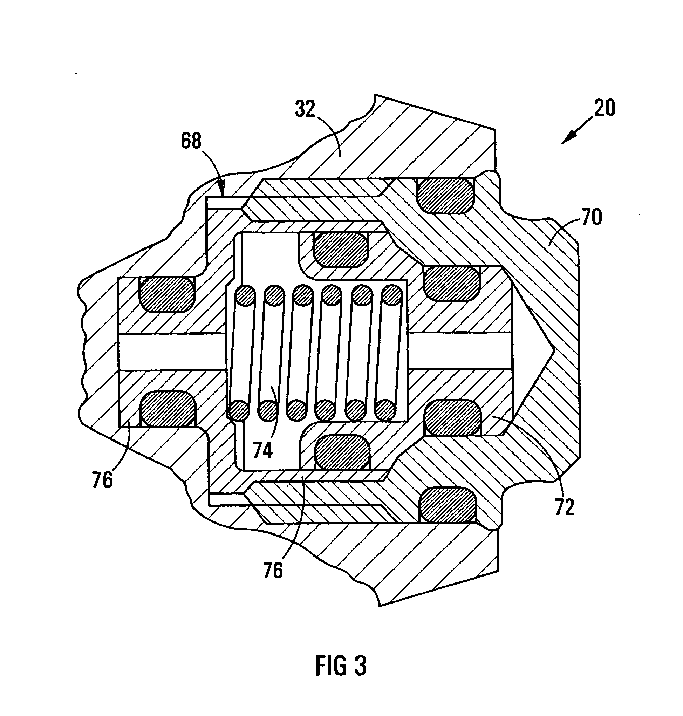

In Figures 1 and 2 of the drawings, numeral 10 generally designates a multifunctional valve unit in accordance with the present invention. The unit 10 comprises, broadly, a filling port 12, a cylinder connector 14, a manually operable shut-off valve 16, a gas pressure regulator 18, a minimum pressure retention valve 20 (see Figure 3), a pressure gauge 22, a flow control device 24, a pressure relief safety valve 26, an automatic shut-off valve 28, and an outlet port 30. The various components 12 - 30 of the valve unit are mounted on, located in or provided by a unitary or monolithic brass main valve body 32, and are described further hereunder.

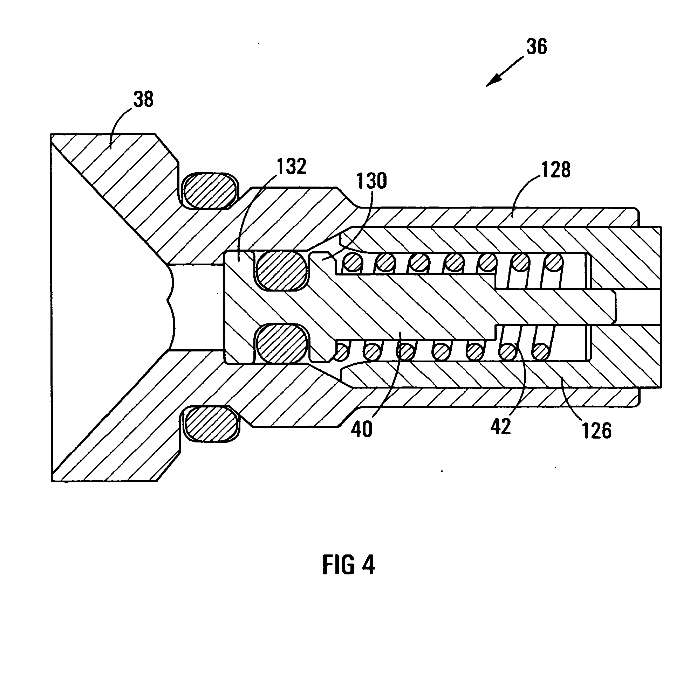

Dealing first with the filling port 12, this is provided by an externally threaded tubular spigot 34 for screwing connection to a gas filling socket (not shown), spigot/socket fashion. The filling port spigot 34 is integral with the valve body 32 and has a hollow tubular interior in which is located an inlet valve 36. The valve 36 includes an insert 38 screwed into the interior of the spigot 34 and which provides a valve seat facing inwardly and against which a head of a mushroom-type closure member 40 seats sealingly, being held against the seat on the insert 38 by a coil spring 42 under compression, whose opposite end abuts against a blind inner end of the interior of the spigot 34. The threaded connection of the insert 38 to the spigot is sealed by an O-ring; and the sealing of the head of the closure member 40 against the seat provided by the insert 30 is also provided by an O-ring on the closure member 40. The O-ring on the closure member 40 is held against the head of the closure member 40 by an annular holder 48 through which the stem of the closure member 40 projects, the spring 42 pressing against the holder 48 to hold the valve 36 closed. An alternative construction for the valve 36 is described hereunder with reference to Figure 4.

The cylinder connector 14 is provided by an externally threaded tubular spigot 50, integral with the valve body 32, for screwing connection, spigot/socket fashion, into a threaded socket (not shown) in the neck of a gas cylinder (also not shown). The spigots 34 and 50 are straight and normal to each other, so that, when the spigot 50 projects upwardly from the neck of a gas cylinder to which it is connected, with the gas cylinder resting vertically on its base, the spigot 34 projects horizontally and laterally outwardly.

The manual shut-off valve 16 is provided on the diametrically opposite side of the valve body 32 from the inlet port 12, and projects from an internally threaded tubular socket 52 in which is it located and mounted, the socket 52 being integral with the valve body 32. A seat 53 of the valve 16 is provided at the inner end of the socket 52 by the valve body 32. A passage 54 leads from the seat 53 of the valve 16 to the inner end of the hollow interior of the cylinder connector 14; and a further passage (not shown) connects said seat 53 for gas flow to the hollow interior of the spigot 34 of the filling port 12 axially inwardly of the seal between the insert 38 and the closure member 40. The valve 16 has a knob 56 keyed rotationally to a spindle which is formed from three parts, namely an axially outer part 58 keyed to the knob 56 for simultaneous rotation with the knob 56, the outer part 58 having an axially inwardly facing cylindrical recess; an intermediate part 60 which is more or less cup-shaped and has a cylindrical protrusion projecting axially outwardly into the recess of the outer part 58, being axially slidable therein but being keyed thereto for simultaneous rotation therewith and with the knob 56, the cup of the part 60 having a cylindrical interior which faces and opens axially inwardly; and an inner part 62 in the form of a cylindrical member rotatably located in the cup of the intermediate part 60 and held in position by a circlip engaging the curved periphery of the inner part 62 near its axially outer end, the circlip engaging a groove in the curved inner surface of the cup of the intermediate part 60 near the floor of the cup. The free end of the inner part 62 projects axially inwardly from and stands proud of the rim of the cup of the intermediate part 60, being provided with a sealing insert which forms a valve closure member and is sealingly seatable on the seat 53 of the valve 16 provided on the valve body 32, thereby to close the passage 54 and to close the passage leading from the seat 53 to the filling port 12.

The recess in the outer part 58 has a blind end of reduced diameter in which a coil spring 64 is located, the spring 64 being under compression and engaging the cylindrical protrusion of the intermediate part 60 to urge the parts 58 and 60 away from each other. The composite spindle comprising the three parts 58, 60 and 62 is held in position by a collar 66 which screws into the socket 52 of the body 32, and bears axially inwardly on the outer part 58. The intermediate part 60 is screwable axially inwardly and outwardly and is in screwing engagement with the interior of the socket 52 at a position axially inwardly of the engagement between the collar 66 and the socket 52. The spring 64 urges the outer part 58 of the spindle against the collar 66. Rotation of the knob 56 rotates the parts 58 and 60 of the spindle to screw the part 60 inwardly or outwardly, depending on the direction of rotation. This moves the inner part 62 either into or out of sealing engagement, via its closure member, with the seat 53 of the valve 16, the circlip permitting the part 62 not to rotate while the part 60 rotates.

The flow path from the filling port 12 to the cylinder connector 14 includes the passage (not shown) from the port 12 to the seat 53 of the shut-off valve 16. The passage from the port 12 to the seat 53 of the valve 16 extends more or less diametrically across the valve body 32, under the automatic shut-off valve 28, and has the passage 54 extending alongside it for part of its length, adjacent the seat 53 of the valve 16. This can be seen from Figure 1 in particular, the flow path from the filling port 12 to the cylinder connector 14 including also the passage 54 and thus has a number of changes in direction and changes in cross-sectional flow area, the part thereof extending from the filling port 12 to the seat 53 of the valve 16 being more or less of the same diameter as the passage 54 and more or less parallel thereto.

Turning now to Figure 3, where the minimum pressure retention valve is generally designated 20, the valve 20 is shown as a self-contained unit housed in a recess 68 provided therefor in the valve body 32. The recess 68 is internally screw-threaded and is closed off by a more or less cup-shaped insert 70 which screws into the recess 68 and is sealed thereto by an O-ring. The insert 78 provides a valve seat, the valve 20 having a closure member 72 located in the recess 68 and urged towards the seat provided by the insert 70 by a coil spring 74 under compression, the spring 74 being received in a socket or recess in the closure member 72 which socket or recess faces towards the inner end of the recess 68. A further cup-shaped insert 76 is held in the inner end of the recess 68 by the insert 70. The cup of the insert 76 faces the insert 70, being received in the cup of the insert 70 and enclosing the closure member 72 and coil spring 74. The insert 76 is sealed to the valve body 32 and to the closure member 72 by respective O-rings, the closure member 72 also being sealed to the insert 70 by an O-ring. A flow path (not shown) from the interior of the socket 52 of the shut-off valve 16 leads from the seat 53 of the valve 16 (Figure 1) to the valve 20, which it enters via a port through the insert 70. This flow path is closed off when the closure member 72 seats on the insert 70, the port being located between the O-ring which seals the closure member 72 to the insert 70, and the O-ring which seals the closure member 72 to the insert 76.

The closure member 72 and the insert 76 each have axial flow passages therethrough, and a flow path (also not shown) leads from the flow passage of the insert 76 to a cavity 78 (see Figures 1 and 2) in the valve body 32 in which the automatic shut-off valve 28 is housed. Said flow path extends respectively from the valve 16 to the valve 20 and from the valve 20 to the valve 28, the passages respectively in the closure member 72 and insert 76 and the space defined between the closure member 72 and the insert 76 containing the spring 74, together form a flow path from the valve 16 to the cavity 78, when the closure member 72 is unseated from the insert 70. In use, opening the valve 16 allows, *via* the port through the insert 70, gas from the gas cylinder to enter between the insert 70 and the closure member 72, so that there is a pressure drop across the closure member 72 which unseats the closure member 72 from the insert 70. This permits gas flow from the valve 16 to the cavity 78. When gas pressure in the cylinder drops below a predetermined threshold value, the spring 74 automatically overcomes said pressure drop across the closure member 72 and again seats the closure member 72 against the insert 70, to close off the flow path from the cylinder via the shut-off valve 16 to the cavity 78. This keeps gas pressure in the gas cylinder at no less than the predetermined threshold value.

Reverting to Figures 1 and 2 and turning to the automatic shut-off valve 28 located in the cavity 78, the valve 28 is shown having a cylindrical seat member 80 which screws into the upper part of the cavity 78. The seat member 18 has a downwardly facing recess. The lower part of the cavity 78 contains an upwardly opening cup-shaped sintered metal filter 82, in whose interior are located a tubular guide having a radially outwardly projecting circumferential flange at is lower end, and a coil spring under compression. A mushroom-type closure member has a stem axially slidable in the tubular guide and a head carrying a sealing insert. The coil spring has a lower end urging the flange of the tubular guide against the floor of the filter 82 and urging the filter 82 against the floor of the cavity 78, the upper end of the coil spring bearing against the head of the closure member and urging it and its sealing insert towards the floor of the recess of the seat member 80. The seat member 80 has a central axial passage therethrough, whose lower end forms a nozzle which is sealable by the sealing insert, when the coil spring, assisted by any gas pressure in the cavity 78, seats the sealing insert against the floor of the recess of the seat member 80 to close its central passage.

The cavity 78 opens upwardly into a hollow tubular upwardly facing spigot 84 which screws spigot/socket fashion into a hollow tubular collar 86. The spigot 84 and collar 86 together define a hollow housing for the pressure regulator 18, which comprises a piston having an annular piston head 88 through which fits a piston rod 90. A pin held captive in the axial passage of the seat member 80 projects upwardly towards the piston rod 90 and downwardly into an upwardly opening central recess in the sealing insert of the closure member of the valve 28. A coil spring 92 under compression bears down on the piston head 88, which in turn bears down on a radially extending circumferential flange at the lower end of the piston rod 90. This urges the pin in the seat member 80 downwardly into and against the floor of the recess in the sealing insert of the closure member of the valve 28, to unseat the sealing insert from the nozzle at the lower end of the axial passage of the seat member 80.

The pressure regulator 18 is selected or constructed so that gas from the gas cylinder which enters the shut-off valve 28 *via* the valve 16 and valve 20 along the associated flow path, has its pressure reduced from that in the gas cylinder to a predetermined lower value, gas at this lower pressure issuing from the cavity 78 *via* the nozzle of the central passage of the seat member 80. The gas leaves the central passage of the seat member 80 through two radial passages leading from the central passage of the seat member 80 into the housing of the pressure regulator 18 provided by the spigot 84 and collar 86, below the piston of the pressure regulator 18. The piston rod 90 has a pair of radial passages entering its lower end, through its passage and below the piston head 88, which radial passages feed from the pressure regulator housing, below the piston, into a central passage in the piston rod 90. This central passage in the piston rod 90 leads axially upwardly in the piston rod 90 from the inner ends of the radial passages, to open out at the top of the piston rod 90. The collar 86 encloses the spring 92.

An annular bonnet insert 94 is held against the rim of the top of the collar 86 by a retaining ring 96 which screws on the outside of the collar 86, spigot/socket fashion. The bonnet insert 94 comprises an annular body 98 from which a centrally located tubular 99 sleeve projects downwardly, around the piston rod 90, towards the piston head 88. An axial passage through the annular body 98 of the bonnet insert 94 and along the interior of said sleeve 99 receives the piston rod 90. A retaining ring 100 is screwed to the lower end of the sleeve provides a radially outwardly projecting circumferential flange against which a coil spring 102 under compression bears downwardly. The coil spring 102 urges a sealing ring 104 sealingly upwardly against the bottom of the annular body 98 of the bonnet insert 94. Two radial passages are provided through the sleeve 99 of the bonnet insert, above the upper end of the piston rod 90 and below the annular body 98 of the bonnet insert 94, to place the central passage of the bonnet insert in communication with a space (not readily visible) defined between the lower surface of the body 98 of the bonnet insert 94 and the sealing ring 104.

Gas pressure above the piston rod 90 in the central passage of the bonnet insert 94 of a sufficient magnitude can urge the sealing ring 104 downwardly, away from the annular body 98 of the body insert 94. This allows gas under pressure to pass along the radial passages of the sleeve 99 of the bonnet insert 94 and then between the annular body 98 of the bonnet insert 94 and sealing ring 104, into the interior of the collar 86. This gas can vent to atmosphere via radial holes in the collar 86. This feature guards against damage caused to components of the pressure regulator 18 and components of the flow control device 24, caused by excessive gas pressure in the central passage of the bonnet insert 94 above the top of the piston rod 90.

The flow control device 24 has a knob 106 screwed to a horizontally split spindle 108 for rotation of the spindle 108 by rotation of the knob 106. The spindle 108 is split into upper and lower parts and is located in an upwardly opening cup-shaped housing therefor, provided by an upwardly opening recess in the bonnet insert 94, above the annular body 98 of the bonnet insert 94. A locking ring 110 screws into the open end of the spindle housing to hold the spindle 108 in position, the spindle being sealed to the wall of its housing by two O-rings, respectively provided in the upper and lower parts of the split spindle. A central hollow stem protrudes downwardly from the lower part of the spindle 108 into the central passage of the annular body 98 of the bonnet insert 94, and provides a gas flow path from central passage of the bonnet insert 94, above the piston 90, to a central cavity defined between the upper and lower parts of the split spindle 108, which cavity contains a sintered metal gas filter insert 112.

A gas flow path (not shown) leads from the cavity containing the filter insert 112, downstream from the insert 112 to a passage 113 (Figure 1) leading downwardly from the interface between the spindle parts to an annular groove in the lower face of the lower spindle part. Below this groove is provided an annular flow regulation disc (not easily visible) having a series of spaced progressively differently-sized flow regulation apertures (increasing in size from a smallest to a largest) therethrough, arranged in an arc about the rotational axis of the spindle 108. The flow regulation disc and both parts of the spindle are keyed together for simultaneous rotation thereof in response to rotation of the knob 106, to place an aperture of desired size and cross-sectional flow area between the annular groove in the lower face of the lower spindle part, and the inlet to a flow passage 114 leading to a circumferential groove in the outer curved surface of the annular body 98 of the bonnet insert 94. This circumferential groove places the passage 114 in flow communication with a radial passage 117 (Figure 1) through a collar 118 held captive between the retaining ring 96 and a downwardly depending skirt of the knob 106, the collar 118 being sealed to the outer surface of the annular body 98 of the bonnet insert 94 by two axially spaced O-rings respectively on opposite sides of said circumferential groove into which the passage 114 leads. The collar 118 has a radially outwardly facing recess 120, into which the radial passage 117 through the collar 118 leads. This recess is internally screw threaded to act as a socket and receives a ribbed hose connection nozzle 122 (Figure 1) which screws into the recess 120 spigot/socket fashion, the nozzle being for insertion into a gas hose.

With regard to the operation of the flow regulation disc, it should be noted that two different modes of operation are possible. In one mode of operation, during rotation of the disc by means of the knob 106 to replace one disc aperture between the flow passages 113 and 114 by an adjacent disc aperture, flow is cut off; and in other mode of operation, during such rotation, gas flow between the flow passages 113 and 114 is not cut off but is maintained, so that flow of gas through the unit 10 from the gas cylinder to its point of use is continuous and unbroken. In this regard it is to be noted that a seal in the form of an O-ring is illustrated in Figure 1 between the opposed mouths of the passages 113 and 114, this O-ring or other seal acting to isolate the intended aperture in the disc through which gas flows from the passage 113 to the passage 114, from the other apertures of the series in the disc. The required mode of operation can easily be achieved, by selecting an O-ring or other seal of required size and shape. When the one mode of operation is required, an O-ring or other seal will be selected which is small enough to ensure that at no time are there two apertures interconnecting the passages 113 and 114 simultaneously; and, when the other mode of operation is required, an O-ring or other seal will be selected which is large enough to ensure that there will always be at least one aperture interconnecting the passages 113 and 114.

Finally, a flow passage 124 (Figure 2) is shown leading from the interior of the housing of the pressure regulator 18 defined by the spigot 84 and the collar 86, between the automatic shut-off valve 28 and the pressure regulator 18, into the inner end of the outlet port 30. The outlet port 30 is externally (or internally) screw threaded, for screwing connection, spigot/socket fashion, to a gas terminal such as a medical gas terminal. Gas can be fed from a gas cylinder to which the cylinder connector 14 is connected, via the shut-off valve 16, *via* the minimum pressure attention valve 20 and *via* the automatic shut-off valve 28, to the outlet port 30. The outlet port 30 is provided by a spigot integral with the valve body 32.

Turning to Figure 4, in which a variation of the valve 36 of Figure 1 is shown, the same reference numerals are used to designate the same parts as in Figures 1 and 2, unless otherwise specified. The primary difference between the construction shown in Figure 4 and the construction shown in Figure 1, with regard to the valve 36, is that the holder 48 is omitted and the valve 36 includes a deep cup 126 which fits over the end of the spring 42 remote from the insert 38 and encloses the spring 42. The open end of the cup is a frictional press-fit or snap-fit into an annular skirt-like extension 128 of the insert 38. The spring 42 bears on an annular shoulder 130 on the closure member 40. The cup 126 protects the spring 42 and particularly the O-ring which seals the head of the closure member 40 to the insert 38. This is especially so when the valve 36 is open and the O-ring (which is located between the head 132 of the closure member 40 and the shoulder 130) is unseated from the insert 38. The protection is against damage from grit or other solids or liquids in the gas flowing through the open valve 36. Furthermore, importantly, the frictional press-fit or snap-fit between the cup 126 and the extension 128 of the insert 38 facilitates the modular removal of the valve 36, as a whole, from the interior of the spigot 34 for repair or replacement, unscrewing of the insert 38 from the spigot 34 acting to pull the cup 126, and hence the spring 42, out of the spigot 34 along with the insert 38, when the insert 38 is withdrawn from the spigot 34.

In use, the cylinder connector 14 is screwed into the top of a gas cylinder (not shown). With shut-off valve 16 open, a filling adaptor can be screwed into the filling port 12 to open the inlet valve 36 to permit, *via* the filling port 12, drawing a vacuum in the cylinder and then filling it with a desired gas such as oxygen. Removal of the filling adaptor allows the inlet valve 36 automatically to close by means of its coil spring 42, reinforced by gas pressure from the cylinder, if the valve 16 is opened.

Thereafter, the valve 16 can be opened to discharge gas from the cylinder. The minimum pressure retention valve 20, as described above, acts automatically to prevent further gas discharge from the cylinder when, because of gas discharge from the cylinder, gas pressure in the cylinder drops to a predetermined threshold value.

In normal use, opening the valve 16 causes gas to pass through the automatic shut-off valve 28 which is held open by the coil spring 92 of the pressure regulator 18. A progressive drop in gas pressure below the piston of the pressure regulator 18, arising from a pressure drop in the gas cylinder caused by gas consumption, or a drop of said pressure below the piston arising from increased demand, allows the coil spring 92 to open the valve 28 further, to compensate therefor, or indeed to reduce flow in response to reduced demand. The knob 106 is simply rotated to place the desired size of aperture opposite the passage 114, to control the gas flow rate through the flow regulator, the knob 106 also having a position where no aperture is in communication with passage 114, so that no flow can take place.

Typically the outlet port 30 will be sealed by an adaptor containing a terminal valve, when gas supply through the port 30 to a gas terminal is required. When such gas supply is not required, the outlet port 30 can be omitted.

Finally, should an unacceptably high gas pressure arise in the pressure regulator housing defined by spigot 84 and collar 86, below the piston of the regulator 18, because of failure or leakage of or through the valve 28, this pressure forces the sealing ring 104 downwardly away from the body 98 of the bonnet insert 94, by compressing the spring 102, permitting gas pressure relief flow into the interior of the collar 86 above the piston, from which collar 86 it vents to atmosphere.

The invention thus provides a versatile multifunctional valve unit, of modular construction, most of whose various sub-assemblies can, as described above, be removed and replaced while the unit 10 is *in situ,* connected to a gas cylinder.

## Claims

1. A multifunctional valve unit (10) for use on a gas cylinder to which it is attached for the controlled filling of the cylinder and for the controlled discharge of gas therefrom, the unit having a unitary or monolithic valve body (32) and the unit comprising:
a filling port (12), provided by the body (32), for use in charging a gas cylinder on which the unit is mounted from a gas supply or source;
a cylinder connector (14), provided by the body (32), the connector (14) being in gas flow communication, via a gas flow path (54) defined in the valve body (32), with the filling port (12), for releasable attachment of the unit to a gas cylinder on which the unit is mounted;
a manually operable manual shut-off valve (16), mounted on the valve body (32), for opening and closing the flow path between the filling port (12) and the cylinder connector (14);
a gas pressure regulator (18), mounted on the valve body (32), for regulating the pressure of gas issuing via the unit (10) from a gas cylinder on which the unit is mounted, the regulator (18) having an inlet in gas flow communication, via a gas flow path defined in the valve body (32) and *via* the manual shut-off valve (16), with the cylinder connector (14), the manual shut-off valve (16) being operative, simultaneously with its opening and closing the flow path between the filling port (12) and the cylinder connector (14), to open and close the flow path between the gas pressure regulator (18) and the cylinder connector (14);
a minimum pressure retention valve (20), mounted on the valve body (32), for retaining gas in a gas cylinder on which the unit is mounted at a pressure above a minimum threshold valve, the minimum pressure retention valve (20) being operative to close the flow path between the cylinder connector (14) and the gas pressure regulator (18) when the pressure in the gas cylinder drops to the threshold value, and to open said flow path when the pressure in the gas cylinder rises above the threshold value and the manual shut-off valve (16) is open;
a pressure gauge (22), mounted on the valve body (32), for measuring and displaying the gas pressure in the flow path (54) between the cylinder connector (14) and the manual shut-off valve (16), and thus also for measuring and displaying the pressure in a gas cylinder on which the unit is mounted;
a flow control device (24), mounted on the valve body (32), having an inlet in gas flow communication with an outlet from the gas pressure regulator (18), for controlling the flow rate of gas issuing from the outlet of the gas pressure regulator (18), and for feeding gas at a controlled flow rate from the gas pressure regulator (18) to a gas outlet (122) from the multifunctional valve unit (10); and
a pressure relief safety valve (26), mounted on the valve body (32), the pressure relief safety valve (26) having an outlet venting to atmosphere and an inlet in communication with the outlet from the gas pressure regulator (18), for relieving gas pressure where the outlet of the gas pressure regulator (18) communicates with the inlet of the flow control device (24), and thus for maintaining gas pressure there below a maximum threshold value, the multifunctional valve unit (10) being
**characterized in that**
the flow control device (24) is, as a whole, replaceably removable from the remainder of the multifunctional valve unit (10) while the cylinder connector (14) is connected to a gas cylinder containing gas and the manual shut-off valve is closed, the remainder of the multifunctional valve unit (10) remaining connected to the gas cylinder by the connector (14) and constituting the valve body (32), the filling port (12), the cylinder connector (14), the shut-off valve (16), the gas pressure regulator (18), the minimum pressure retention valve (20), the pressure gauge (22), the gas outlet (122) and the pressure relief safety valve (26).

2. A unit as claimed in Claim 1, **characterized in that** it comprises an automatic shut-off valve (26), provided in the flow path between the flow control device (24) and the manual shut-off valve (16), the automatic shut-off valve (26) being automatically operable, in response to a pressure drop above a minimum threshold value across the automatic shut-off valve (26) and the gas pressure regulator (18), to close off the flow path between the manual shut-off valve (16) and the gas pressure regulator (18).

3. A unit as claimed in Claim 2, **characterized in that** the automatic shut-off valve (26) is, as a whole, replaceably removable from the remainder of the multifunctional valve unit (10) while the cylinder connector (14) is connected to a gas cylinder containing gas and the manual shut-off valve (16) is closed.

4. A unit as claimed in any one of Claims 1 - 3 inclusive, **characterized in that** it comprises an outlet port (30), for connection to a gas terminal, the port (30) being provided by the valve body (32) and being in communication with the flow path between the automatic shut-off valve (26) and the gas pressure regulator (18).

5. A unit as claimed in any one of Claims 1 - 4 inclusive, **characterized in that** the minimum pressure retention valve (20) is operative to open and close the flow path between the cylinder connector (14) and the pressure regulator (18) at a position on the side of the manual shut-off valve (16) remote from the cylinder connector (14).

6. A unit as claimed in any one of the preceding claims, **characterized in that** the minimum pressure retention valve (20) is, as a whole, replaceably removable from the remainder of the multifunctional valve unit (10) while the cylinder connector (14) is connected to a gas cylinder containing gas and the manual shut-off valve (16) is closed.

7. A unit as claimed in any one of the preceding claims, **characterized in that** it comprises at least one gas filter (82, 112) downstream of the minimum pressure retention valve (20) in the direction of gas flow from the minimum pressure retention valve (20) towards and through the flow control device (24).

8. A unit as claimed in any one of the preceding claims, **characterized in that** gas pressure regulator (18) is, as a whole, replaceably removable from the remainder of the multifunctional valve unit (10) while the cylinder connector (14) is connected to a gas cylinder containing gas and the manual shut-off valve (16) is closed.

9. A unit as claimed in any one of the preceding claims, **characterized in that** it comprises, mounted on the valve body (32), an inlet valve (36) which is a one-way or non-return valve for preventing gas flow from taking place in a direction from the manual shut-off valve (16) towards and out of the filling port (12).

10. A unit as claimed in Claim 9, **characterized in that** the inlet valve (36) is, as a whole, replaceably removable from the remainder of the multifunctional valve unit (10) while the cylinder connector (14) is connected to a gas cylinder containing gas and the manual shut-off valve (16) is closed.

## Patentansprüche

1. Eine mehrfunktionale Ventileinheit (10) zur Verwendung auf einem Gaszylinder an dem sie zur geregelten Füllung des Zylinders und zum geregelten Ablassens des Gases daraus angebracht wird, wobei die Einheit über einen einheitlichen oder monolithischen Ventilkörper (32) verfügt und folgendes umfasst:
einen in den Körper (32) integrierten Abfüllanschluss (12) der zum Füllen eines sich darunter befindlichen Gaszylinders aus einer Gasversorgung oder Gasquelle verwendet wird;
eine in den Körper integrierte Zylinderverbindung (14), wobei die Verbindung (14) über einen im Ventilkörper (32) definierten Gasflussweg (54) mit dem Abfüllanschluss (12) in Gasflussverbindung steht, wobei die Verbindung lösbar mit dem sich darunter befindlichen Gaszylinder verbunden ist;
ein handbetriebenes Absperrventil (16) das auf dem Ventilkörper (32) angebracht ist und zum Öffnen und Schließen des Flusswegs zwischen dem Abfüllanschluss (12) und der Zylinderverbindung (14) dient;
einen Gasdruckregler (18) der auf dem Ventilkörper (32) angebracht ist und zur Regulierung des Drucks des über die Einheit (10) aus einem sich darunter befindlichen Gaszylinder austretenden Gases dient, wobei der Regler (18) einen über den im Ventilkörper (32) definierten Gasflussweg und das handbetriebene Absperrventil (16) mit der Zylinderverbindung (14) in Gasflussverbindung stehende Eintrittsöffnung hat, und wobei das handbetriebene Absperrventil (16) bei der Verwendung desselben nicht nur das Öffnen und Schließen des Flusswegs zwischen dem Abfüllanschluss (12) und der Zylinderverbindung (14) regelt, sondern auch das Öffnen und Schließen des Flusswegs zwischen dem Gasdruckregler (18) und der Zylinderverbindung (14);
ein auf dem Ventilkörper (32) angebrachtes Mindestdruckregelventil (20) welches den Druck des Gases in einem sich darunter befindlichen Gaszylinder über einem bestimmten Mindestgrenzwert hält, wobei das Mindestdruckregelventil (20) dazu verwendet wird, den Flussweg zwischen der Zylinderverbindung (14) und dem Gasdruckregler (18) abzuschließen wenn der Druck im Gaszylinder auf den Mindestgrenzwert abfällt, und den Flussweg zu öffnen wenn der Druck im Gaszylinder über den Mindestgrenzwert ansteigt und das handbetriebene Absperrventil (16) geöffnet ist;
ein auf dem Ventilkörper (32) angebrachter Druckmesser (22), der den Gasdruck im Flussweg (54) zwischen der Zylinderverbindung (14) und dem handbetriebenen Absperrventil (16) misst und anzeigt, und der **dadurch** auch den Druck in dem sich darunter befindlichen Gaszylinder misst und anzeigt;
ein auf dem Ventilkörper (32) angebrachter Durchflussregler (24) mit einer Eintrittsöffnung in Gasflussverbindung mit einer Austrittsöffnung des Gasdruckreglers (18), durch den die Durchflussgeschwindigkeit des aus der Austrittsöffnung des Gasdruckreglers (18) austretenden Gases geregelt wird und durch den Gas mit einer geregelten Durchflussgeschwindigkeit vom Gasdruckregler (18) einer Gasaustrittsöffnung (122) der mehrfunktionalen Ventileinheit (10) zugeführt wird; und
ein auf dem Ventilkörper (32) angebrachtes Druckentlastungssicherheitsventil (26) mit einer sich nach außen entlüftenden Austrittsöffnung und einer Eintrittsöffnung die mit der Austrittsöffnung des Gasdruckreglers (18) verbunden ist, die den Gasdruck an der Übergangsstelle zwischen der Austrittsöffnung des Gasdruckreglers (18) und der Eintrittsöffnung des Durchflussreglers (24) abbaut, und die somit den Gasdruck an dieser Stelle unter einem Höchstgrenzwert hält, wobei die mehrfunktionale Ventileinheit (10) **dadurch gekennzeichnet** wird, dass der Durchflussregler (24) als Ganzes ersetzbar vom Rest der mehrfunktionalen Ventileinheit (10) abgenommen werden kann, während die Zylinderverbindung (14) mit einem Gas enthaltenden Gaszylinder verbunden bleibt und das handbetriebene Absperrventil geschlossen ist, wobei der Rest der mehrfunktionalen Ventileinheit (10) durch die Verbindung (14) mit dem Gaszylinder verbunden bleibt und den Ventilkörper (32), den Abfüllanschluss (12), die Zylinderverbindung (14), das Absperrventil (16), den Gasdruckregler (18), das Mindestdruckregelventil (20), den Druckmesser (22), die Gasaustrittsöffnung (122) und das Druckentlastungssicherheitsventil (26) bildet.

2. Eine Einheit wie in Anspruch 1 beschrieben, **dadurch gekennzeichnet, dass** sie ein automatisches Absperrventil (26) im Flussweg zwischen dem Durchflussregler (24) und dem handbetriebenen Absperrventil (16) umfasst, wobei das automatische Absperrventil (26) automatisch betrieben wird, auf eine Druckminderung durch das automatische Absperrventil (26) und den Gasdruckregler (18) über einem Mindestgrenzwert hin, damit der Flussweg zwischen dem handbetriebenen Absperrventil (16) und dem Gasdruckregler (18) abgesperrt wird.

3. Eine Einheit wie in Anspruch 2 beschrieben, **dadurch gekennzeichnet, dass** das automatische Absperrventil (26) als Ganzes ersetzbar vom Rest der mehrfunktionalen Ventileinheit (10) abgenommen werden kann, während die Zylinderverbindung (14) mit einem Gas enthaltenden Gaszylinder verbunden bleibt und das handbetriebene Absperrventil (16) geschlossen ist.

4. Eine Einheit wie in einem der Ansprüche 1 bis einschließlich 3 beschrieben, **dadurch gekennzeichnet, dass** es einen Austrittsanschluss (30) zur Verbindung mit einem Gasanschluss gibt, wobei der Anschluss (30) durch den Ventilkörper (32) gebildet wird und mit dem Flussweg zwischen dem automatischen Absperrventil (26) und dem Gasdruckregler (18) verbunden ist.

5. Eine Einheit wie in einem der Ansprüche 1 bis einschließlich 4 beschrieben, **dadurch gekennzeichnet, dass** das Mindestdruckregelventil (20) dazu verwendet wird, den Flussweg zwischen der Zylinderverbindung (14) und dem Druckregler (18) in einer Position an der Seite des handbetriebenen Absperrventils (16) mit Abstand zur Zylinderverbindung (14) zu öffnen und zu schließen.

6. Eine Einheit wie in einem der vorstehenden Ansprüche beschrieben, **dadurch gekennzeichnet, dass** das Mindestdruckregelventil (20) als Ganzes ersetzbar vom Rest der mehrfunktionalen Ventileinheit (10) abgenommen werden kann, während die Zylinderverbindung (14) mit einem Gas enthaltenden Gaszylinder verbunden und das handbetriebene Absperrventil (16) geschlossen ist.

7. Eine Einheit wie in einem der vorstehenden Ansprüche beschrieben, **dadurch gekennzeichnet, dass** es mindestens einen Gasfilter (82, 112) stromabwärts von dem Mindestdruckregelventil (20) in Richtung des Gasflusses vom Mindestdruckregelventil (20) zum und durch den Durchflussregler (24) umfasst.

8. Eine Einheit wie in einem der vorstehenden Ansprüche beschrieben, **dadurch gekennzeichnet, dass** der Gasdruckregler (18) als Ganzes ersetzbar vom Rest der mehrfunktionalen Ventileinheit (10) abgenommen werden kann, während die Zylinderverbindung (14) mit einem Gas enthaltenden Gaszylinder verbunden und das handbetriebene Absperrventil (16) geschlossen ist.

9. Eine Einheit wie in einem der vorstehenden Ansprüche beschrieben, **dadurch gekennzeichnet, dass** auf dem Ventilkörper (32) ein Eintrittsventil (36) befestigt ist, das als Einwegs- oder Rückschlagventil dient um zu verhindern, dass ein Gasfluss von dem handbetriebenen Absperrventil (16) in Richtung des und durch den Abfüllanschluss (12) zustande kommt.

10. Eine Einheit wie in Anspruch 9 beschrieben, **dadurch gekennzeichnet, dass** das Eintrittsventil (36) als Ganzes ersetzbar vom Rest der mehrfunktionalen Ventileinheit (10) abgenommen werden kann, während die Zylinderverbindung (14) mit einem Gas enthaltenden Gaszylinder verbunden und das handbetriebene Absperrventil (16) geschlossen ist.

## Revendications

1. Une unité de valve multifonctionnelle (10) pour utilisation sur une bouteille de gaz, à laquelle elle est attaché pour permettre le remplissage contrôlé du cylindre et le refoulement du gaz depuis cette dernière, l'unité disposant d'un corps de valve unitaire ou monolithique (32) et l'unité se composant de :
un orifice de remplissage (12), constitué du corps (32), pour utilisation lors du remplissage d'une bouteille de gaz sur laquelle l'unité est montée à partir d'une source ou une alimentation en gaz ;
un connecteur de bouteille (14), constitué du corps (32), du connecteur (14) étant en communication avec le débit de gaz, via une voie de passage du gaz (54) définie dans le corps de valve (32), avec l'orifice de remplissage (12), pour permettre une fixation amovible à une bouteille de gaz sur laquelle l'unité est montée ;
une valve de retenue actionnable manuellement (16), montée sur le corps de valve (32), pour ouvrir et fermer la voie de passage entre l'orifice de remplissage (12) et le connecteur de bouteille (14) ;
un régulateur de pression du gaz (18) monté au corps de valve (32), pour réguler la pression du gaz provenant de l'unité (10) à partir d'une bouteille de gaz sur laquelle l'unité est montée, le régulateur (18) disposant d'une entrée dans la communication avec le débit de gaz, via une voie de passage du gaz définie dans le corps de la valve (32) et via la valve de retenue manuelle (16), avec le connecteur de bouteille (14), la valve de retenue manuelle (16) étant en fonctionnement, avec l'ouverture et la fermeture simultanée de la voie de passage entre l'orifice de remplissage (12) et le connecteur de bouteille (14), pour ouvrir et fermer la voie de passage entre le régulateur de pression du gaz (18) et le connecteur de bouteille (14);
une valve de rétention de pression minimum (20), montée au corps de la valve (32), pour retenir le gaz dans une bouteille de gaz sur laquelle l'unité est montée, à une pression supérieure à une valeur seuil minimum, la valve de rétention de pression minimum (20) fonctionnant pour fermer la voie de passage entre le connecteur de bouteille (14) et le régulateur de pression du gaz (18) lorsque la pression dans la bouteille de gaz chute à la valeur seuil, et pour ouvrir ladite voie de passage lorsque la pression dans la bouteille de gaz s'élève au-delà de la valeur seuil et que la valve de retenue manuelle (16) est ouverte ;
un manomètre (22), monté sur le corps de valve (32), pour mesurer et afficher la pression du gaz dans la voie de passage (54) entre le connecteur de bouteille (14) et la valve de retenue manuelle (16), ainsi que pour mesurer et afficher la pression dans une bouteille de gaz sur laquelle l'unité est montée ;
un système de contrôle du flux (24), monté sur le corps de valve (32), disposant d'une entrée dans la communication avec le débit de gaz, avec une sortie depuis le régulateur de pression du gaz (18), afin de contrôler le débit de gaz provenant de la sortie du régulateur de pression du gaz (18), et pour alimenter le gaz à un débit contrôlé à partir du régulateur de pression du gaz (18) vers une sortie de gaz (122) à partir de l'unité de valve multifonctionnelle (10) ; et
une soupape de sûreté à pression (26), montée sur le corps de la valve (32), la soupape de sûreté à pression (26) disposant d'une sortie permettant une évacuation dans l'atmosphère et d'une entrée communiquant avec la sortie depuis le régulateur de pression du gaz (18), afin de laisser s'échapper la pression du gaz lorsque la sortie du régulateur de pression du gaz (18) communique avec l'entrée du système de contrôle du flux (24), permettant ainsi d'y maintenir la pression du gaz sous une valeur seuil maximum, l'unité de valve multifonctionnelle (10) **se caractérisant par** le système de contrôle du débit (24) peut être retiré dans son intégralité du reste de l'unité de valve multifonctionnelle (10) et être remplacé, pendant que le connecteur de bouteille (14) est connecté à une bouteille de gaz contenant du gaz et que la valve de retenue manuelle est fermée, le reste de l'unité de valve multifonctionnelle (10) restant connecté à la bouteille de gaz par le connecteur (14), composée du corps de la valve (32), de l'orifice de remplissage (12), du connecteur de bouteille (14), de la valve de retenue manuelle (16), du régulateur de pression du gaz (18), de la valve de rétention de pression minimum (20), du manomètre (22), de la sortie de gaz (122) et de la soupape de sûreté à pression (26).

2. Une unité telle que revendiquée dans la Réclamation 1, **caractérisée en ce qu'**elle se compose d'une valve de retenue automatique (26), présente dans le passage du flux entre le système de contrôle du débit (24) et la valve de retenue manuelle (16), la valve de retenue automatique (26) s'actionnant automatiquement, en réponse à une chute du pression au-delà d'une valeur seuil minimum au niveau de la valve de retenue automatique (26) et du régulateur de pression du gaz (18), pour fermer la voie de passage entre la valve de retenue manuelle (16) et le régulateur de pression du gaz (18).

3. Une unité telle que revendiquée dans la Réclamation 2, **caractérisée en ce que** la valve de retenue automatique (26) peut être retirée dans son intégralité du reste de l'unité de valve multifonctionnelle (10) et être remplacée, pendant que le connecteur de bouteille (14) est connecté à une bouteille de gaz contenant du gaz et que la valve de retenue manuelle (16) est fermée.

4. Une unité telle que revendiquée dans n'importe laquelle des Réclamations 1 à 3 comprise, **caractérisée en ce qu'**elle se compose d'un orifice de sortie (30) permettant une connexion à une source de gaz, l'orifice (30) étant présent dans le corps de la valve (32) et étant en communication avec la voie de passage entre la valve de retenue automatique (26) et le régulateur de pression du gaz (18).

5. Une unité telle que revendiquée dans n'importe laquelle des Réclamations 1 à 4 comprise, **caractérisée en ce que** la valve de rétention de pression minimum (20) fonctionne pour ouvrir et fermer la voie du débit entre le connecteur de bouteille (14) et le régulateur de pression (18) dans une position sur le côté de la valve de retenue manuelle (16) à distance du connecteur de bouteille (14).

6. Une unité telle que revendiquée dans n'importe laquelle des réclamations précédentes, **caractérisée en ce que** la valve de rétention de pression minimum (20) peut être retirée dans son intégralité du reste de l'unité de valve multifonctionnelle (10) et être remplacée, pendant que le connecteur de bouteille (14) est connecté à une bouteille de gaz contenant du gaz et que la valve de retenue manuelle (16) est fermée.

7. Une unité telle que revendiquée dans n'importe laquelle des réclamations précédentes, **caractérisée en ce qu'**elle se compose d'au moins un filtre à gaz (82, 112) en aval de la valve de rétention de pression minimum (20), en direction du système de contrôle du débit (24) et dans celui-ci.

8. Une unité telle que revendiquée dans n'importe laquelle des réclamations précédentes, **caractérisée en ce que** le régulateur de pression du gaz (18) peut être retiré dans son intégralité du reste de l'unité de valve multifonctionnelle (10) et être remplacé, pendant que le connecteur de bouteille (14) est connecté à une bouteille de gaz contenant du gaz et que la valve de retenue manuelle (16) est fermée.

9. Une unité telle que revendiquée dans n'importe laquelle des réclamations précédentes, **caractérisée en ce qu'**elle se compose, montée au corps de la valve (32), d'une soupape d'introduction (36) qui est une soupape à sens unique ou de non-retour pour éviter que le débit de gaz ne circule depuis la valve de retenue manuelle (16) et n'en sorte (12).

10. Une unité telle que revendiquée dans la Réclamation 9, **caractérisée en ce que** la valve d'introduction (36) peut être retirée dans son intégralité du reste de l'unité de valve multifonctionnelle (10) et être remplacée, pendant que le connecteur de bouteille (14) est connecté à une bouteille de gaz contenant du gaz et que la valve de retenue manuelle (16) est fermée.
